(19) **Europäisches Patentamt / European Patent Office / Office européen des brevets**

(11) **EP 4 622 281 A1**

(12) **EUROPEAN PATENT APPLICATION**

(43) Date of publication:
24.09.2025 Bulletin 2025/39

(21) Application number: 25156881.2

(22) Date of filing: 10.02.2025

(51) International Patent Classification (IPC):
H04N 23/611 (2023.01)    H04N 23/69 (2023.01)
H04N 5/262 (2006.01)    G06V 10/25 (2022.01)
G06V 40/16 (2022.01)    H04N 7/15 (2006.01)
H04N 23/63 (2023.01)    H04N 23/68 (2023.01)
H04N 23/80 (2023.01)

(52) Cooperative Patent Classification (CPC):
H04N 23/611; G06V 10/25; G06V 10/774;
G06V 10/82; G06V 40/161; H04N 5/2628;
H04N 7/15; H04N 23/632; H04N 23/635;
H04N 23/68; H04N 23/69; H04N 23/815

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 22.03.2024 US 202463568942 P
23.12.2024 US 202419000194

(71) Applicant: INTEL Corporation
Santa Clara, CA 95054 (US)

(72) Inventors:
• Matichin, Hava
4906445 Tikva (IL)
• Barber, Dor
Herzliya (IL)
• Yang, Bin
ShangHai, 201201 (CN)
• You, Qing
Beijing, 100190 (CN)

(74) Representative: **Samson & Partner Patentanwälte mbB**
**Widenmayerstraße 6**
**80538 München (DE)**

(54) **METHODS AND APPARATUS FOR HIGH QUALITY AND LOW POWER DYNAMIC REGION-OF-INTEREST (ROI) CROPPING**

(57) Systems, apparatus, articles of manufacture, and methods are disclosed for high quality and low power dynamic region of interest (ROI) cropping. An example apparatus disclosed herein provides a first image to image signal processor (ISP) circuitry, the ISP circuitry to implement an image processing pipeline to process the first image. The example apparatus also downscales the first image to generate a second image having lower resolution than the first image and identifies a region of interest (ROI) in the second image. The example apparatus further provides coordinates of the ROI to the ISP circuitry, the ISP circuitry to crop the first image based on the coordinates and to output a third image based on the cropped first image.

FIG. 2

EP 4 622 281 A1

**Description**

RELATED APPLICATION

This patent claims the benefit of U.S. Provisional Patent Application No. 63/568,942, which was filed on March 22, 2024. U.S. Provisional Patent Application No. 63/568,942 is hereby incorporated herein by reference in its entirety. Priority to U.S. Provisional Patent Application No. 63/568,942 is hereby claimed.

BACKGROUND

Some video conferencing systems use a camera sensor and an image signal processor (ISP) to deliver audio and visual communication to conference participants. The camera sensor captures the image or video feed of the participants. The sensor collects raw light data from the environment, converting it into an electronic signal. The ISP processes the raw data from the camera sensor by applying various algorithms to enhance the image, such as noise reduction, color correction and sharpening. The video conference experienced by the conference participants depends, at least in part, on the camera sensor and algorithms implemented by the ISP.

BRIEF DESCRIPTION OF THE DRAWINGS

FIG. 1 is a block diagram of an example environment in which an example dynamic region of interest (ROI) cropping circuitry operates to generate high quality and low power dynamic region-of-interest (ROI) cropping.

FIG. 2 is a block diagram of an example implementation of the dynamic ROI cropping circuitry of FIG. 1.

FIG. 3 is a block diagram of an example implementation of the lightweight pipeline of FIG. 2.

FIG. 4 is a block diagram of an example implementation of the detector circuitry of FIG. 2.

FIG. 5 is a block diagram of an example implementation of the ISP circuitry of FIG. 2.

FIG. 6 illustrates an example of a full field-of-view (FOV) input frame and the corresponding output frame after applying ROI framing.

FIG. 7 illustrates an example of an object padding.

FIG. 8 illustrates an example condition in which the ROI cropping changes based on a new object of interest entering the frame.

FIG. 9 is a flowchart representative of example machine readable instructions and/or example operations that may be executed, instantiated, and/or performed by example programmable circuitry to implement the dynamic ROI cropping circuitry 110 of FIG. 2.

FIG. 10 is a flowchart representative of example machine readable instructions and/or example operations that may be executed, instantiated, and/or performed by example programmable circuitry to implement the lightweight pipeline 215 of FIG. 2.

FIG. 11 is a flowchart representative of example machine readable instructions and/or example operations that may be executed, instantiated, and/or performed by example programmable circuitry to implement the detector circuitry 220 of FIG. 2.

FIG. 12 is a block diagram of an example processing platform including programmable circuitry structured to execute, instantiate, and/or perform the example machine readable instructions and/or perform the example operations of FIGS. 9-11 to implement the dynamic ROI cropping circuitry 110 of FIG. 2.

FIG. 13 is a block diagram of an example implementation of the programmable circuitry of FIG. 12.

FIG. 14 is a block diagram of another example implementation of the programmable circuitry of FIG. 12.

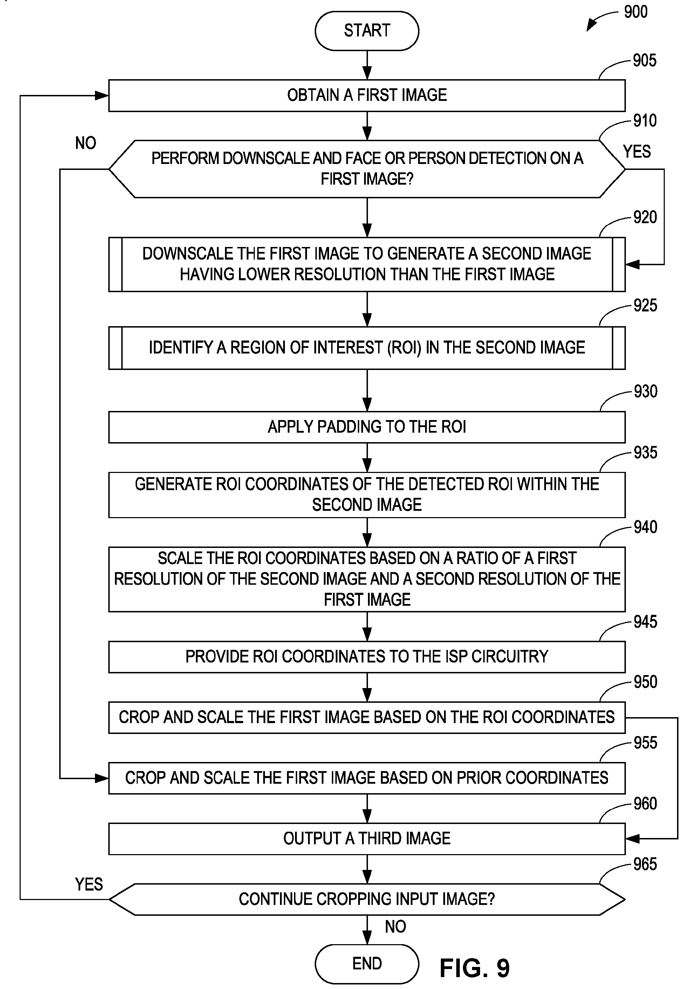

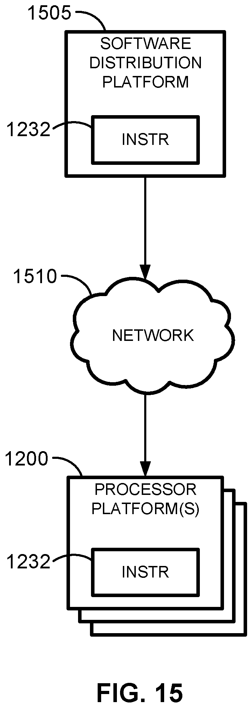

FIG. 15 is a block diagram of an example software/firmware/instructions distribution platform (e.g., one or more servers) to distribute software, instructions, and/or firmware (e.g., corresponding to the example machine readable instructions of FIGS. 9-11) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

DETAILED DESCRIPTION

Over the years, camera sensors, including those embedded in laptops, have experienced advancements in resolution. Some of these sensors operate at 5 megapixels, 8 megapixels, or even higher, enhancing the potential for capturing high-quality images. However, despite these technological strides, the resolution utilized in video conferencing has remained relatively low, typically at 720p or 1080p. This is primarily due to ongoing challenges related to network bandwidth and latency, which are expected to persist for the foreseeable future.

One approach is to implement an ISP pipeline in video conferencing systems to crop or downscale the high-resolution image captured by the sensor to the target resolution used for the conference call. The ISP pipeline generates a reduced-resolution image that is designed for video conferencing scenarios, which saves power.

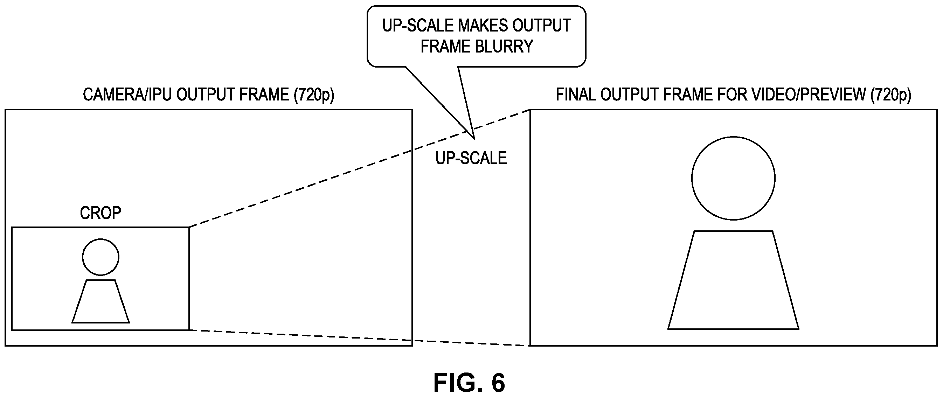

One strategy used in this context is "auto framing," also known as "dynamic ROI cropping." The objective of auto framing is to dynamically crop a ROI, thereby focusing on the area where the videocall participant is located and improving the user experience of the conference call participants. Auto framing identifies one or more people of interest within the sensor's FOV, crops a region containing the detected one or more people, and scales the cropped region to an output resolution as shown in FIG. 6. This ensures that the output frames consistently track the participants and keep them within the frame.

Some approaches for dynamic ROI cropping function after the ISP pipeline and face limitations. These approaches may require substantial power and bandwidth resources to process high-resolution ISP outputs, or operate on lower-resolution images, which, after cropping, result in images that are too small for effective use in video conferencing resolution and require upscaling. However, upscaling can lead to less detailed, blurry images, thereby diminishing overall image quality. Some framing approaches present a trade-off between power consumption and image quality. In contrast, example ROI cropping techniques disclosed herein address this compromise by performing dynamic ROI cropping within the ISP process itself, eliminating the need for post-cropping upscaling, while maintaining image quality with reasonable power and bandwidth usage.

In some ROI cropping approaches that focus on image quality, the ISP pipeline operates at full resolution, outputting high-quality, high-resolution images, with dynamic ROI cropping applied as a post processing operation. In some ROI cropping approaches that focus on performance (e.g., such as power and bandwidth efficiency), the ISP pipeline processes a low-resolution image, and dynamic ROI cropping is applied as a post-processing operation. This may involve upscaling the cropped image to a higher resolution, which can impact image quality. In some cases, following the performance-oriented approach, upscaling is performed using smart upscaling techniques, such as super-resolution. However, while these methods can enhance image quality, they incur additional power consumption and may still fall short of matching the detail provided by the original high-resolution image.

Thus, some ROI cropping approaches have built-in trade-offs between image quality and performance. For example, some image-quality-oriented approaches consume high bandwidth and power because the entire ISP pipeline operates at full resolution, processing all areas of the frame-even those outside the region of interest (ROI) that will later be discarded. This approach leads to unnecessary resource usage.

Some performance-oriented approaches output an image from the ISP that, after ROI cropping, is too small for the output frame and therefore requires upscaling. This upscaling leads to lower image quality compared to image-quality-oriented configurations. The final output may appear blurry because this approach does not fully utilize the high-resolution capabilities of the camera sensor.

An additional disadvantage of such solutions, in which ROI cropping is performed post-pipeline, is that image cropping and upscaling are executed in software. This approach may utilize additional computational resources, increasing processing overhead. In contrast, example ROI cropping techniques disclosed herein leverage in-pipeline cropping and scaling functions, reducing the need for post-processing computations and optimizing both power efficiency and performance.

In contrast, example ROI cropping techniques disclosed apply a high-resolution input image to a lightweight detection/segmentation pipeline that can be executed on the system's neural processing unit (NPU), graphics processing unit (GPU), central processing unit (CPU), etc., to perform an initial ROI cropping on a reduced resolution image. The coordinates for this initial cropped ROI are provided to the ISP pipeline, which uses this information to perform ROI cropping and scaling directly on the high-resolution input image, thereby providing an output with the correct resolution without the need for upscaling. This approach enhances efficiency while preserving image quality.

The disclosed example solutions offer several advantages, including lower power consumption. By focusing the ISP pipeline on the ROI of the image that will be displayed, the system conserves power and resources by avoiding unnecessary processing of pixels that will ultimately be discarded.

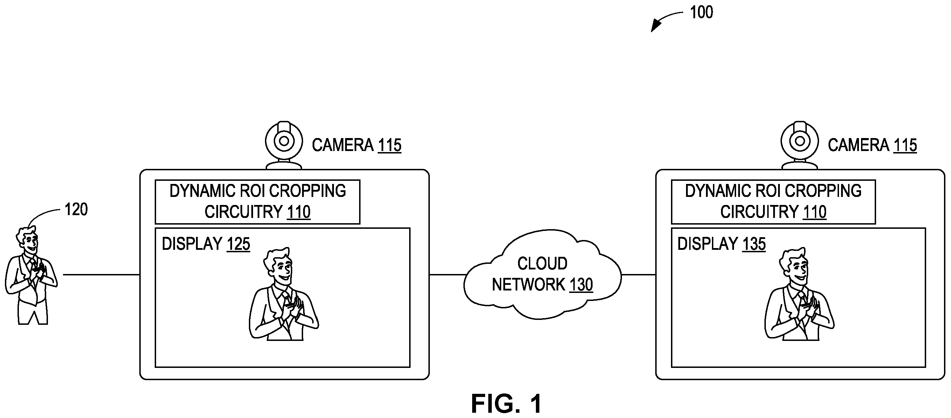

FIG. 1 is a block diagram of an example environment 100 including example dynamic ROI cropping circuitry 110 that performs high quality and low power dynamic region-of-interest (ROI) cropping. An example camera 115 captures an image of a user 120 during a video call. The dynamic ROI cropping circuitry 110 generates a cropped ROI image. The cropped image is displayed on the local user's display 125. The cropped ROI image is also sent to a second user on the video conferencing call via a cloud network 130 or any other network, where it is displayed on their display screen 135.

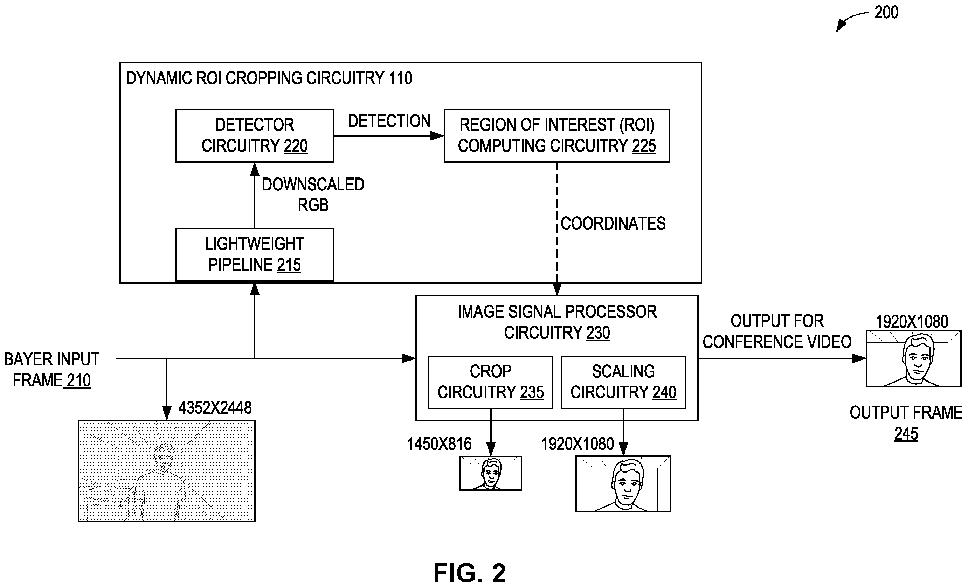

FIG. 2 is a block diagram of an example environment 200 illustrating an example implementation of the dynamic ROI cropping circuitry 110 of FIG. 1 to perform high quality and low power dynamic ROI cropping. The dynamic ROI cropping circuitry 110 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the dynamic ROI cropping circuitry 110 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The example environment 200 of FIG. 2 includes an example high-resolution input frame 210, which may be a high-resolution Bayer input frame 210, that is provided to the dynamic ROI cropping circuitry 110 to generate cropped ROI coordinates from the Bayer input frame 210. The example dynamic ROI cropping circuitry 110 includes an example lightweight pipeline 215, example detector circuitry 220, and example region of interest (ROI) computing circuitry 225. In the illustrated example, the high-resolution input frame 210 is also provided to example image signal processor (ISP) circuitry 230. The ISP circuitry 230 includes at least example cropping circuitry 235 and example scaling circuitry 240, enabling efficient image processing by focusing on the ROI identified by the dynamic ROI cropping circuitry 110 and scaling it appropriately for display or transmission without unnecessary computation. The ISP circuitry 230 outputs an output frame 245 corresponding to an example ROI cropped image for video conferencing.

In the illustrated example, the input frame 210 is an input image with full field-of-view of the user and its surroundings. The input frame 210 is obtained from the camera sensor 115 and provided to both the main ISP circuitry 230 pipeline and the lightweight pipeline 215. This dual-path approach allows for flexibility in image processing, with the main ISP circuitry 230 handling comprehensive image enhancements and the lightweight pipeline 215 focusing on faster or more resource-efficient operations.

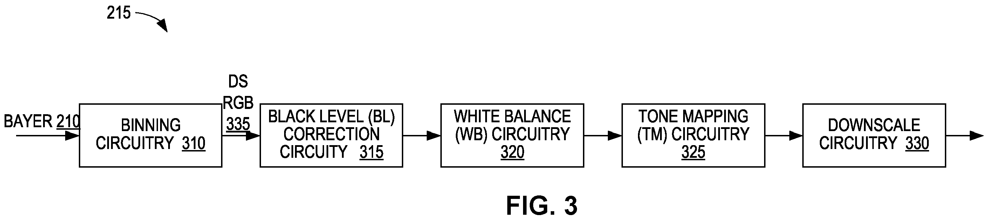

The lightweight pipeline 215 performs limited but sufficient processing to enable the detector circuitry 220 to determine ROI bounding boxes from a downscaled version of the input frame 210. This can achieve fast operation with reduced power consumption while still supporting the detection or analysis functions to perform ROI cropping. A schematic diagram of an example lightweight pipeline 215 is provided in FIG. 3. The lightweight pipeline 215 of FIG 3 includes example binning circuitry 310, example black level (BL) correction circuitry 315, example white balance (WB) circuitry 320, example tone mapping (TM) circuitry 325, and example downscale circuitry 330.

Turning to FIG. 3, the binning circuitry 310 performs pixel binning to downscale and convert a first input image 210 into a red, green, blue (RGB) image 335. This operation reduces resolution while maintaining key image features, enabling faster processing and lower power consumption for detection tasks. The black level correction, the white balancing or the tone mapping operations performed on the first input image 210 are based on data from the ISP circuitry 230 (FIG. 2). The ISP circuitry 230 generates the data based on another input image preceding the first input image.

The binning circuitry 310 provided the RGB image 335 to the BL correction circuitry 315 which adjusts the black levels in the RGB image 335, ensuring that the darkest parts of the image are correctly represented without unwanted noise or offset. The BL correction circuitry 315 compensates for variations in sensor characteristics, lighting conditions, and/or other factors that might cause a misalignment in the black point, ensuring that shadows or low-light areas are accurately rendered. This adjustment helps improve overall image quality, contrast, and color accuracy, especially in low-light or uneven lighting environments.

The image from the BL correction circuitry 315 is provided to the WB circuitry 320. The WB circuitry 320 is responsible for adjusting the colors in the image to ensure that white objects appear white under varying lighting conditions. The WB circuitry 320 maintains color accuracy by compensating for different light sources, such as sunlight, fluorescent light, or incandescent light, etc., which can cast color tints on images. The WB circuitry 320 dynamically adjusts the red, green, and blue (RGB) channels to achieve a neutral color balance, ensuring that colors in the image appear natural and consistent regardless of the lighting environment.

The WB circuitry 320 provides its corrected image to the tone mapping circuitry 325, which adjusts the image's brightness, contrast, and dynamic range, ensuring it is visually optimized for displays 125, 135 (FIG. 1). In some examples, the tone mapping circuitry 325 converts high dynamic range (HDR) data in the corrected image into a viewable range while preserving details in both shadows and highlights, resulting in a well-balanced image that maintains visual fidelity across different lighting conditions. HDR data includes image or video information that captures a wide range of luminance levels, from the darkest shadows to the brightest highlights, more accurately reflecting the range of light seen by the human eye.

The tone mapping circuitry 325 provides its mapped image to the downscale circuitry 330, which reduces the resolution of the mapped image downsampling the image from its original resolution (e.g., 4352x2448 pixels in the example of FIG. 2) to a lower resolution (e.g., 1450x816, or some other resolution). This is done to improve performance, save bandwidth, reduce processing power, and meet specific display requirements.

Returning to FIG. 2, the detector circuitry 220 receives a downscaled version of the full field of view image as input and processes it to identify one or more ROI bounding boxes. An ROI can include a person, a face and/or any other object to be included in the ROI. The detector circuitry 220 then outputs the detected ROI bounding box(es) to the ROI computing circuitry 225.

Some ROI detectors operate on post-pipeline images (e.g., GRB/YUV images) with HDR bit depths beyond the standard resolution of 8 bits, such as bit depths of 10 bits, 12 bits, or even higher. Running detection directly on HDR input may involve a large and complex detection network capable of handling variations in illumination conditions.

Another challenge lies in collecting and synthesizing annotated unprocessed images for training. This can be more difficult than using standard preprocessed and annotated datasets, as raw sensor data lacks the structure and consistency of processed images. For these reasons, running detectors directly on unprocessed sensor input is not practical, as it may require excessive computational resources, introduce complexity, and face challenges related to data availability for training.

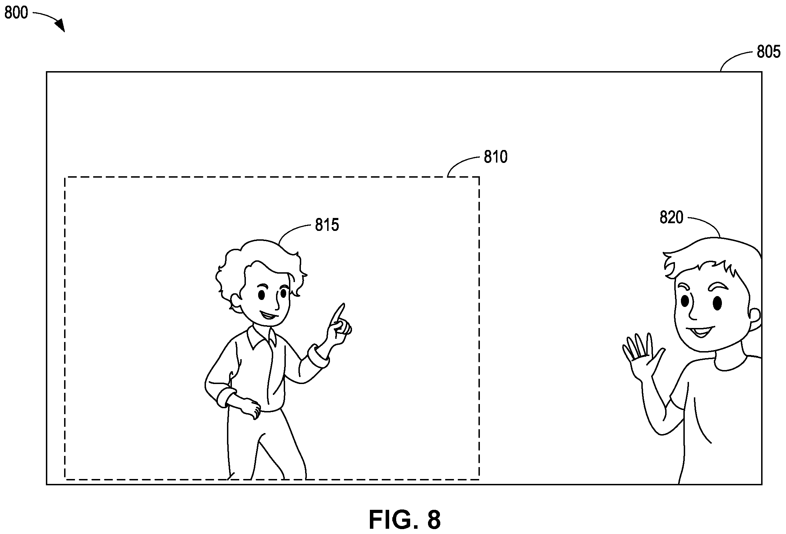

In the illustrated example, the detector circuitry 220 is provided with the full field-of-view input image. If not, other objects of interest outside of the crop but still within the camera's field of view may be overlooked. For example, as illustrated in FIG. 8, an example of such a condition is shown. Turning to FIG. 8, the black bounding box 805 represents the full field-of-view of the camera 115 (FIG. 1), while the dashed bounding box 810 marks the ROI crop computed by the detector circuitry 220 for the first object of interest 815 prior to the second object of interest 820 entering the frame. The ROI crop should adjust to changes in the scene. However, if a cropped image was provided to the detector circuitry 220, the detector circuitry 220 will not be aware of the new object entering the scene and, therefore, cannot include the new object in the ROI computations.

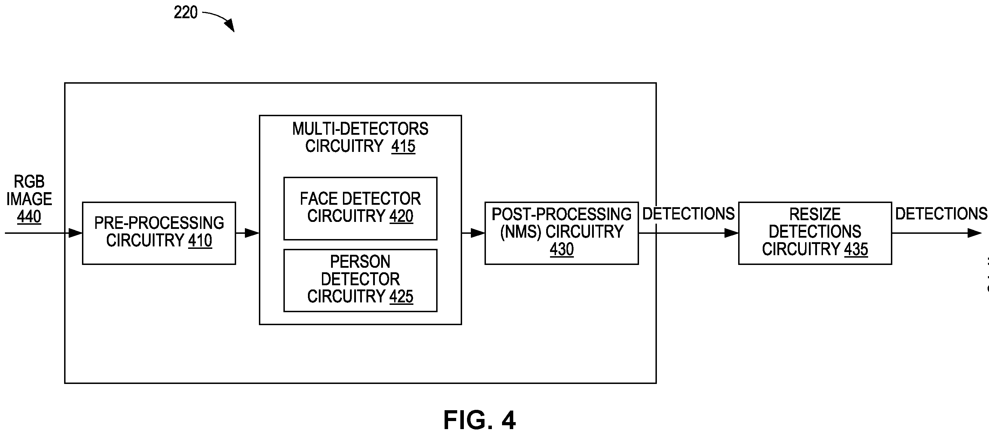

FIG. 4 illustrates an example implementation of the detector circuitry 220 of FIG. 2. The detector circuitry 220 of FIG. 4 may be instantiated (e.g., creating an instance of, bring into being for any length of time, materialize, implement, etc.) by programmable circuitry such as a Central Processor Unit (CPU) executing first instructions. Additionally or alternatively, the detector circuitry 220 of FIG. 4 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 4 may, thus, be instantiated at the same or different times. Some or all of the circuitry of FIG. 4 may be instantiated, for example, in one or more threads executing concurrently on hardware and/or in series on hardware. Moreover, in some examples, some or all of the circuitry of FIG. 4 may be implemented by microprocessor circuitry executing instructions and/or FPGA circuitry performing operations to implement one or more virtual machines and/or containers.

The example detector circuitry 220 of FIG. 2 includes example pre-processing circuitry 410, example multi-detectors circuitry 415, which includes example face detector circuitry 420 and example person detector circuitry 425. The example detector circuitry 220 of FIG. 2 also includes example post-processing non-maximum suppression (NMS) circuitry 430 and example resize detections circuitry 435. In the illustrated example, the pre-processing circuitry 410 accepts an example downscaled (e.g., downsampled) input RGB image 440. The pre-processing circuitry 410 preprocesses the RGB image 440, including value scaling, to normalize pixel values and prepare the image for effective analysis.

The pre-processing circuitry 410 provides the preprocessed image the multi-detectors circuitry 415 to identify objects of interest. For example, the multi-detectors circuitry 415 includes face detector circuitry 420 to identify objects of interest corresponding to human faces and generate a list of detection coordinates representing the bounding boxes around these objects. In some examples, the face detector circuitry 420 implements one or more convolutional neural networks (CNNs) and/or other machine learning models trained to perform inference on the preprocessed image to generate the detection coordinates representing the bounding box(es) for one or more faces in the image. In the illustrated example, the multi-detectors circuitry 415 also includes the person detector circuitry 425 to identify objects of interest corresponding to one or more human bodies and generate a list of detection coordinates representing the bounding boxes around these objects. In some examples, the person detector circuitry 425 implements one or more CNNs and/or other machine learning models trained to perform inference on the preprocessed image to generate the detection coordinates representing the bounding box(es) for one or more human bodies in the image.

The obtained bounding boxes (e.g., faces and/or persons) are filtered to obtain bounding boxes with satisfactory detection probability (e.g., meeting or exceeding a configured threshold) and without duplications. In the illustrated example, the multi-detectors circuitry 415 includes two types of detectors, the face detector circuitry 420 and the person detector circuitry 420. A configuration in which only the face detector circuitry 420 is active can suffer from higher miss detections, such as when the person is turning and not facing the camera. A configuration in which only the person detection circuitry 425 is active can result in less accurate framing. The multi-detectors circuitry 415 of the illustrated example includes both the face detector circuitry 420 and the person detection circuitry 425 can offer better robustness, accuracy, and flexibility to accommodate diverse user preferences. For example, the multi-detectors circuitry 415 with both the face detector circuitry 420 and the person detection circuitry 425 can prioritize focusing the frame mainly on a detected face, but also including the upper body, or ensure the entire person remains within the frame. These adaptive capabilities enhance user experience by tailoring the detection and framing to specific needs or contexts.

To combine the results of the face detector circuitry 420 and the person detection circuitry 425, the post-processing NMS circuitry 430 applies NMS to refine the detection results by removing redundant or overlapping bounding boxes. NMS ensures that accurate and confident detections are retained while others are deleted/removed, improving the overall reliability of the detection system. In the illustrated example where both the face detector circuitry 420 and the person detection circuitry 425 are active concurrently, an example matching procedure implemented by the post-processing NMS circuitry 430 operates to identify a single detection associated with each person detected in the frame. An example matching criterion is that at least 80% of the face area must be within a detected person's bounding box for both bounding boxes to be considered the same individual. For example, if both a person and a face are detected, and more than 80% of the face is within the person's detected area, both bounding boxes are treated as the same person, and only the face detection is used for framing calculations. In some examples, only one of the detectors may successfully detect the person (if the other detector fails to do so). As a result, the two detection modalities can coexist even after this matching stage.

In the illustrated examples, the resize detections circuitry 435 adjusts the filtered bounding boxes from the post-processing NMS circuitry 430 to match the original image or display resolution, ensuring proper alignment and scaling for accurate visualization or further processing. The resize detections circuitry 435 then upscales (e.g., upsamples) its generated bounding box coordinates are to correspond to the dimensions of the original HDR input image, ensuring they are accurately mapped to the original image resolution for proper visualization or further processing. Together, these operations optimize detection accuracy and performance while ensuring the results are properly scaled and visually consistent.

Returning to FIG. 2, the ROI computing circuitry 225 pads and merges the detected object(s) or object bounding box(es) from the detector circuitry 220. For example, ROI computing circuitry 225 adds padding around each detected object (e.g., bounding box), with the padding size proportional to the object's (e.g., bounding box's) dimensions. The amount of padding on each side of the object (e.g., bounding box)is configurable, allowing for adjustments based on particular application needs or user preferences. This technique ensures that objects are appropriately expanded, which can improve detection robustness and framing accuracy.

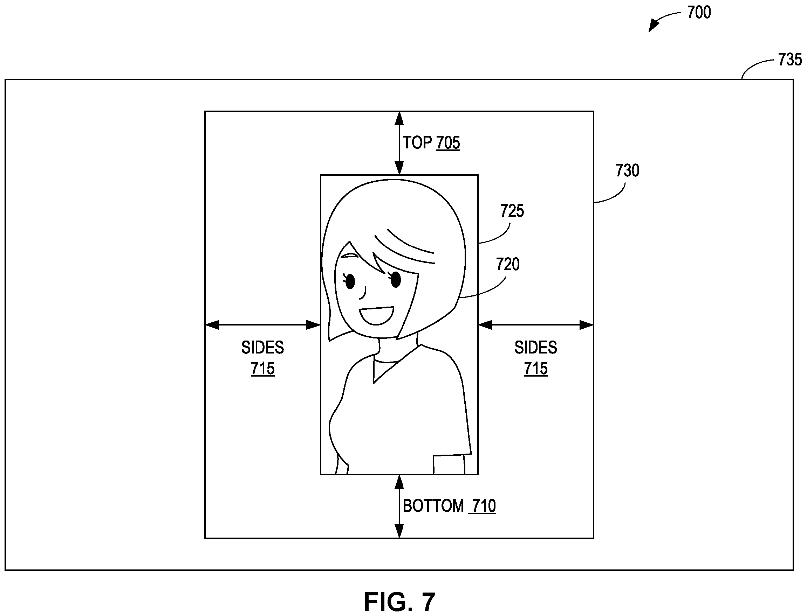

FIG. 7 illustrates an example operations 700 performed by the ROI computing circuitry 225 to pad a bounding box of an object. In the illustrated example, the ROI computing circuitry 225 applies a framing algorithm to calculate the coordinates of the ROI crop while ensuring smooth motion, maintaining object padding and adhering to other desired properties. The ROI computing circuitry 225 takes the bounding box(es) of object(s) of interest, as identified by the detector circuitry 220, as input, merges (e.g., filters) the bounding boxes as described above, then pads the filtered object bounding box(es) to determine the coordinates of the ROI(s) to provide to the ISP circuitry 230. This process ensures that the cropping is stable, visually smooth, and properly adjusted to maintain focus on the target objects while meeting user-defined preferences and the requirements of the displays 125 and 135.

The example padding operations 700 implemented by the ROI computing circuitry 225 include applying padding to the top 705, bottom 710, and sides 715 of a filtered bounding box 725 (or filtered ROI 725) corresponding ot a detected person 720. The person's detected bounding box 725 is padded to create an example bounding box 730. In the illustrated example, the the ROI computing circuitry 225 calculates the padded size to be proportion to the detection dimension according to Equation 1 to 4.

$$padding_{left} = detection_{width} * config_{factor_{sides}}$$

Equation 1.

$$padding_{right} = detection_{width} * config_{factor_{sides}}$$

Equation 2.

$$padding_{top} = detection_{height} * config_{factor_{top}}$$

Equation 3.

$$padding_{bottom} = detection_{height} * config_{factor_{bottom}}$$

<div align="center">Equation 4.</div>

Equation 1 calculates the amount of padding applied to the left side of a detected region (e.g., a detected face or a detected person) based on its width and a configurable scaling factor. The $detection_{width}$ represents the measured width of the detected area or bounding box around the ROI 725. The $config_{factor_{sides}}$ is a configurable scaling parameter that determines how much padding is applied proportionally relative to the width of the detection. The $config_{factor_{sides}}$ can be adjusted for a particular application (e.g., ensuring the ROI is centered, allowing for margins, or providing smoother transitions). Equation 1 multiplies the detected object's width by the configuration factor to compute the amount of padding added to the left side of the detection.

Similar calculations apply to the right, top and bottom sides, with each side's padding determined by multiplying the respective dimension (height for top and bottom, width for right) by their corresponding configuration factors according to Equation 2, 3, and 4 respectively.

In some examples multiple types of detectors are used, each detector maybe assigned its own set of padding parameters. Once all detected areas are padded according to their respective parameters, the individual detections or multi-modality detections are unified to create a single joint bounding box. This process integrates the outputs from different detectors into a cohesive representation, ensuring accurate and comprehensive object detection cross various detection modalities.

To prevent the ROI from changing repeatedly and creating visual instability, some example implementation of the dynamic ROI cropping circuitry 110 restrict ROI updates to specific conditions. These conditions include when the joint bounding box is touching the ROI borders or when the object's size becomes significantly small relative to the ROI (based on a defined threshold). This approach ensures smoother transitions, reduces unnecessary adjustments, and enhances overall stability.

In some examples, the detector circuitry 220 compares the current ROI position relative to the desired ROI position to enable a smooth transition between the two ROI. This approach allows the ROI to move gradually from its current location to the target position, enhancing user experience by mimicking the natural, fluid motion of a physical camera or a camera operated by a human cameraman. This smooth motion creates a more natural and visually appealing framing effect.

In some examples, the ROI computing circuitry 225 adjusts the calculated crop coordinates to maintain a particular video conferencing aspect ratio. After correcting the aspect ratio, the crop coordinates ($L_{cropX}$, $L_{cropY}$), which were originally calculated on the lower resolution image used during the detection stage, are upscaled to determine the ROI coordinates for the input resolution ($H_{cropX}$, $H_{cropY}$), according to the following equations:

$$x_{ratio} = \frac{L_{cropX}}{L_{width}}$$

<div align="center">Equation 5.</div>

$$y_{ratio} = \frac{L_{cropY}}{L_{height}}$$

<div align="center">Equation 6.</div>

$$H_{cropX} = x_{ratio} * H_{width}$$

<div align="center">Equation 7.</div>

$$H_{cropY} = y_{ratio} * H_{height}$$

<div align="center">Equation 8.</div>

Equation 5 to 8 defines the relationship between the ROI coordinates and the full image or frame dimensions in both horizontal and vertical directions. Equations 5 to 8 map the calculated anchor ratios to actual cropped coordinates within the image. Equation 5 calculates the horizontal anchor coordinate ratio for defining the ROI in relation to the full frame or image dimensions. $L_{cropX}$ represents the horizontal coordinate of the starting point (left edge) of the cropped ROI. $L_{width}$ represents the total width of the full frame or image from which the ROI is cropped. The $x_{ratio}$ is the proportion of the cropped horizontal region's starting position relative to the entire image's width. This value helps define how the cropped ROI is positioned horizontally within the overall frame.

Equation 6 calculates the vertical anchor coordinate ratio for defining the ROI in relation to the full frame or image dimensions. $L_{cropY}$ represents the vertical coordinate of the starting point (top edge) of the cropped ROI. $L_{height}$ represents the total height of the full frame or image from which the ROI is cropped. The $y_{ratio}$ is the proportion of the cropped vertical region's starting position relative to the full image.

Equation 7 maps the horizontal anchor position ratio, $x_{ratio}$ to the actual horizontal cropped dimension, scaled by $H_{width}$ (the desired output or resolution width).

Equation 8 maps the vertical anchor position ratio, $y_{ratio}$ to the actual vertical cropped dimension, scaled by $H_{height}$ (the desired output or resolution height).

Equation 6 to Equation 8 scale the anchor positions ($L_{cropX}$, $L_{cropY}$), from the original image dimensions to a target cropped resolution. This allows the system to dynamically adjust the position the ROI is in both horizontal and vertical directions proportionally within the target output dimensions.

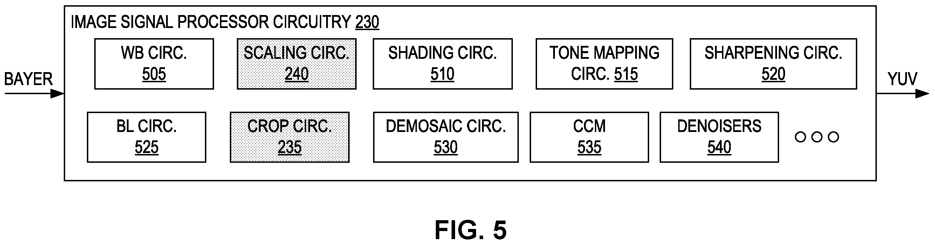

Returning to FIG. 2, the ROI computing circuitry 225 dynamically calculates the ROI coordinates for detected object(s) (e.g., faces, persons, etc.) in the input frame 210. The ROI computing circuitry 225 provides the ROI coordinates to the ISP circuitry 230, where cropping and scaling of the HDR input frame 210 occur within the main ISP circuitry pipeline. FIG. 5 illustrates the example ISP circuitry 230. The ISP circuitry 230 includes example crop circuitry 235, example scaling circuitry 240, example white balance (WB) circuitry 505, example shading circuitry 510, example tone mapping circuitry 515, example sharpening circuitry 520, example BL circuitry 525, example demosaic circuitry 530, example color correction matrix (CCM) circuitry 535, example denoiser circuitry 540.

Some disclosed examples leverage the existing scaling and crop circuitry within the ISP circuitry 230 pipeline to perform ROI cropping as early as possible based on the ROI coordinates from the ROI computing circuitry 225. The ISP circuitry 230 scale a first cropped first image with cropped resolution (e.g., 1450 x 816 resolution or any other resolution) to a new scaled resolution (e.g., 1920 x 1080 resolution or any other resolution), to determine a third image with output resolution (e.g., 1920 x 1080 or any other resolution), which is an output image for video conference. The third image is scaled based on a resolution of a video display.

This approach confines the heavy computational processing of the pipeline implemented by the ISP circuitry 230 to only the pixels within the ROI and scales the image to the desired output resolution for a conference call (e.g., 720p or 1080p) rather than processing the full HDR input image at full sensor resolution, which can be as high as 8MP or more. This improves computational efficiency and reduces power consumption by focusing processing resources on the relevant portion of the image at the necessary resolution.

Because the existing ISP circuitry 230 pipeline hardware can handle image scaling, additional power consumption is avoided, as there is no need for a separate software scaler, unlike in previous approach. Additionally the processing performed by the lightweight pipeline 215 on a current frame uses the results of the processing performed by the ISP circuitry 230 on a previous frame.

The example WB circuitry 505 adjusts the colors in the image to ensure that the colors appear neutral under different lighting conditions, compensating for color casts caused by varying light sources. The example shading circuitry 510 compensates for uneven brightness or color across the image, caused by lens imperfections, ensuring uniform exposure and color throughout. The example tone mapping circuitry 515 maps HDR data to the displayable range preserving details in both highlights and shadows for a more visually appealing image. The example sharpening circuitry 520 enhances the edges and fine details in an image by increasing contrast along edges to improve perceived clarity and definition. The example BL circuitry 525 adjusts the black level in an image to maintain accurate color representation and prevent overly bright or washed-out shadows. The example demosaic circuitry 530 converts the raw Bayer filter data from the camera sensor 115 into a full-color image by interpolating missing color information at each pixel. The example CCM circuitry 535 adjusts the colors in an image to account for sensor characteristics and ensure accurate color reproduction under different lighting conditions. The example denoiser circuitry 540 reduces noise in an image caused by low-light, high international organization for standardization (ISO) settings. The denoiser circuitry 540 addresses shot noise, which appears as random speckles in low-light conditions. The denoiser circuitry 540 also reduces dark current, which is the signal generated by a camera sensor in complete darkness, which can introduce a grainy or washed-out appearance in low-light images. Furthermore, the denoiser circuitry 540 improves the effects of analog-digital gains, which amplify the signal from the sensor to make faint details more visible.

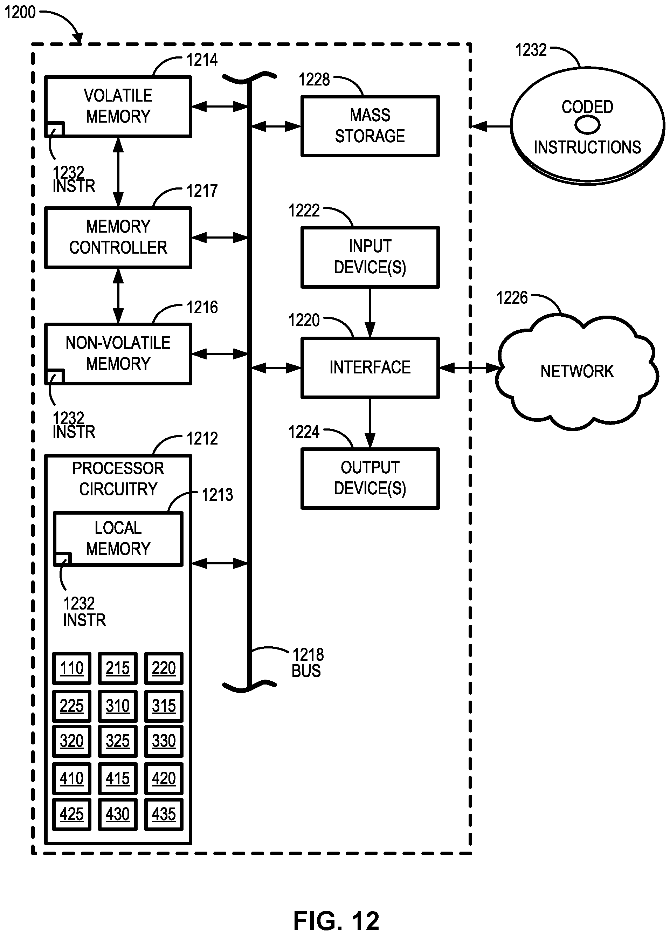

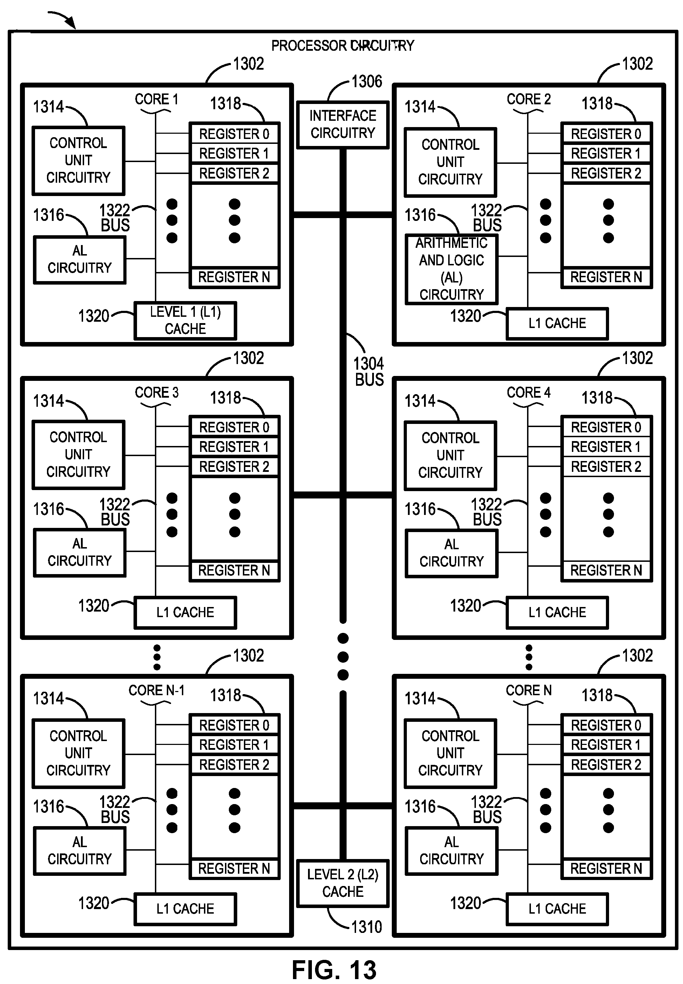

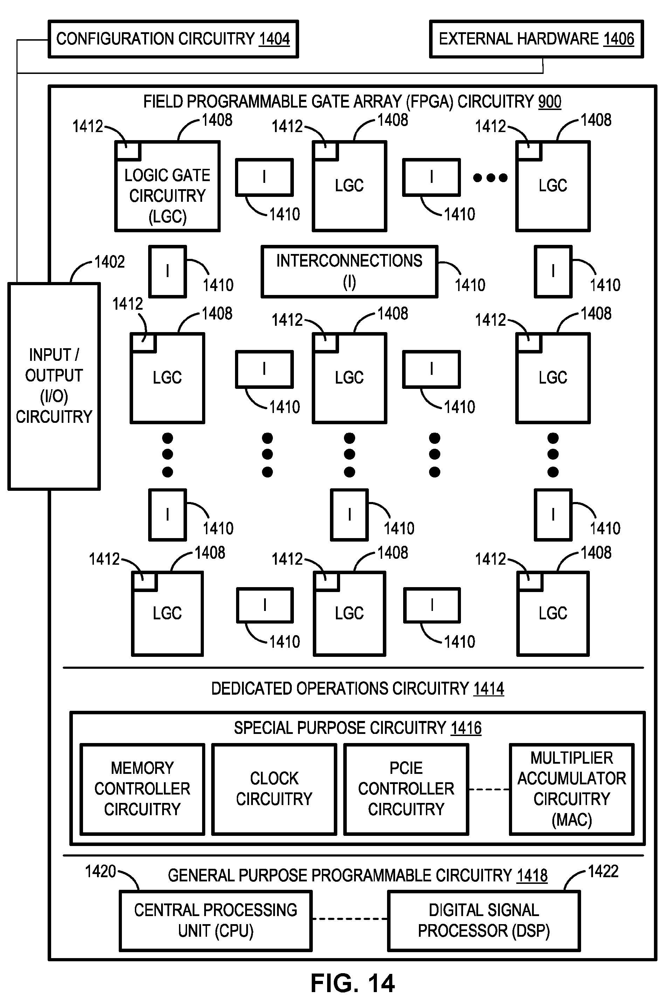

In some examples, the dynamic ROI cropping circuitry 110 includes means for downscaling. For example, the means for downscaling may be implemented by lightweight pipeline 215. In some examples, the lightweight pipeline 215 may be instantiated by programmable circuitry such as the example programmable circuitry 1212 of FIG. 12. For instance, the lightweight pipeline 215 may be instantiated by the example microprocessor 1300 of FIG. 13 executing machine executable instructions such as those implemented by at least blocks 910, 920 of FIG. 9. In some examples, the lightweight pipeline 215 may be instantiated by hardware logic circuitry, which may be implemented by an ASIC, XPU, or the FPGA circuitry 1400 of FIG. 14 configured and/or structured to perform operations corresponding to the machine readable instructions. Additionally or alternatively, the lightweight pipeline 215 may be instantiated by any other combination of hardware, software, and/or firmware. For example, the lightweight pipeline 215 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the dynamic ROI cropping circuitry 110 includes means for identifying a ROI. For example, the means for identifying may be implemented by ROI computing circuitry 225. In some examples, the ROI computing circuitry 225 may be instantiated by programmable circuitry such as the example programmable circuitry 1212 of FIG. 12. For instance, the ROI computing circuitry 225 may be instantiated by the example microprocessor 1300 of FIG. 13 executing machine executable instructions such as those implemented by at least blocks 910, 920 of FIG. 9. In some examples, the ROI computing circuitry 225 may be instantiated by hardware logic circuitry, which may be implemented by an ASIC, XPU, or the FPGA circuitry 1400 of FIG. 14 configured and/or structured to perform operations corresponding to the machine readable instructions. Additionally or alternatively, the ROI computing circuitry 225 may be instantiated by any other combination of hardware, software, and/or firmware. For example, the ROI computing circuitry 225 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the means for identifying a ROI includes means for providing coordinates of the ROI to the ISP circuitry, means for applying padding to the ROI, means for generating the coordinates of the ROI, and means for scaling the ROI coordinates based on a ratio.

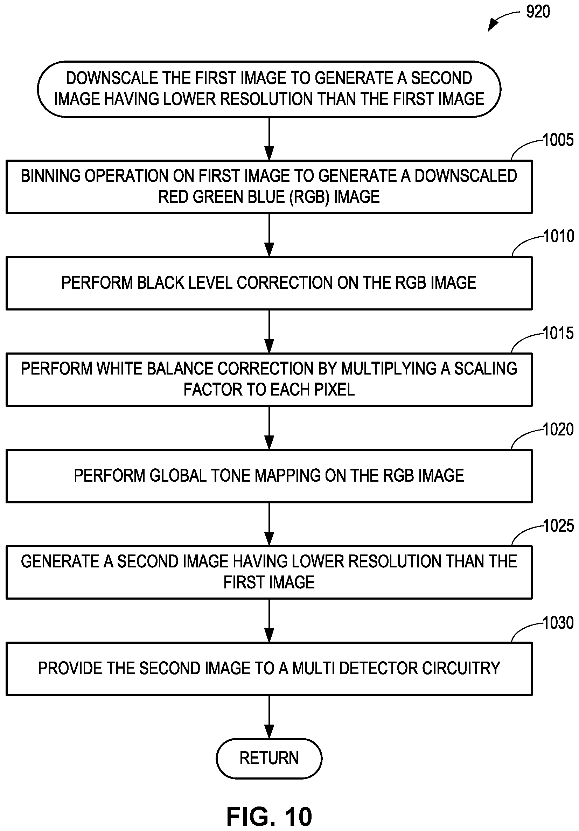

In some examples, the dynamic ROI cropping circuitry 110 includes means for performing a black level correction. For example, the means for performing may be implemented by black level correction circuitry 315. In some examples, the black level correction circuitry 315 may be instantiated by programmable circuitry such as the example programmable circuitry 1212 of FIG. 12. For instance, the black level correction circuitry 315 may be instantiated by the example microprocessor 1300 of FIG. 13 executing machine executable instructions such as those implemented by at least blocks 1010 of FIG. 10. In some examples, the black level correction circuitry 315 may be instantiated by hardware logic circuitry, which may be implemented by an ASIC, XPU, or the FPGA circuitry 1400 of FIG. 14 configured and/or structured to perform operations corresponding to the machine readable instructions. Additionally or alternatively, black level correction circuitry 315 may be instantiated by any other combination of hardware, software, and/or firmware. For example, the black level correction circuitry 315 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the dynamic ROI cropping circuitry 110 includes means for performing white balancing. For example, the means for performing white balancing may be implemented by white balance circuitry 320. In some examples, the white balance circuitry 320 may be instantiated by programmable circuitry such as the example programmable circuitry 1212 of FIG. 12. For instance, the white balance circuitry 320 may be instantiated by the example microprocessor 1300 of FIG. 13 executing machine executable instructions such as those implemented by at least blocks 1015 of FIG. 10. In some examples, the white balance circuitry 320 may be instantiated by hardware logic circuitry, which may be implemented by an ASIC, XPU, or the FPGA circuitry 1400 of FIG. 14 configured and/or structured to perform operations corresponding to the machine readable instructions. Additionally or alternatively, white balance circuitry 320 may be instantiated by any other combination of hardware, software, and/or firmware. For example, the white balance circuitry 320 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

In some examples, the dynamic ROI cropping circuitry 110 includes means for performing tone mapping. For example, the means for performing tone mapping may be implemented by tone mapping circuitry 325. In some examples, the tone mapping circuitry 325 may be instantiated by programmable circuitry such as the example programmable circuitry 1212 of FIG. 12. For instance, the tone mapping circuitry 325 may be instantiated by the example microprocessor 1300 of FIG. 13 executing machine executable instructions such as those implemented by at least blocks 1020 of FIG. 10. In some examples, the tone mapping circuitry 325 may be instantiated by hardware logic circuitry, which may be implemented by an ASIC, XPU, or the FPGA circuitry 1400 of FIG. 14 configured and/or structured to perform operations corresponding to the machine readable instructions. Additionally or alternatively, the tone mapping circuitry 325 may be instantiated by any other combination of hardware, software, and/or firmware. For example, the tone mapping circuitry 325 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

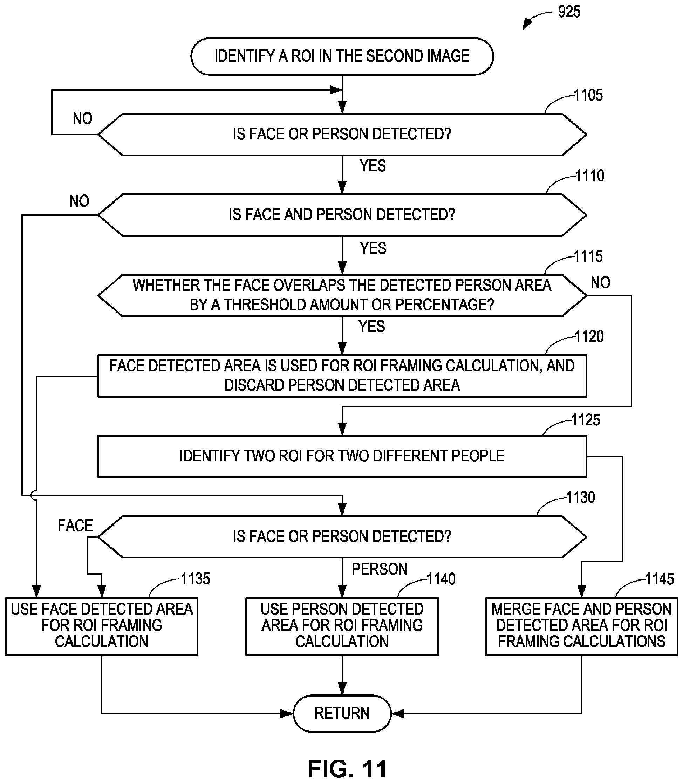

In some examples, the dynamic ROI cropping circuitry 110 includes means for detecting a face or a person. For example, the means for detecting may be implemented by multi-detector circuitry 415. In some examples, the multi-detector circuitry 415 may be instantiated by programmable circuitry such as the example programmable circuitry 1212 of FIG. 12. For instance, the multi-detector circuitry 415 may be instantiated by the example microprocessor 1300 of FIG. 13 executing machine executable instructions such as those implemented by at least blocks 910 of FIG. 9 and 1105, 1110, 1130 of FIG. 11. In some examples, the multi-detector circuitry 415 may be instantiated by hardware logic circuitry, which may be implemented by an ASIC, XPU, or the FPGA circuitry 1400 of FIG. 14 configured and/or structured to perform operations corresponding to the machine readable instructions. Additionally or alternatively, the multi-detector circuitry 415 may be instantiated by any other combination of hardware, software, and/or firmware. For example, the multi-detector circuitry 415 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the dynamic ROI cropping circuitry 110 of FIG. 1 is illustrated in FIG. 2, one or more of the elements, processes, and/or devices illustrated in FIG. 2 may be combined, divided, re-arranged, omitted, eliminated, and/or implemented in any other way. Further, the example lightweight pipeline 215, the example detector circuitry 220, the example ROI computing circuitry 225, the example binning circuitry 310, the example BL correction circuitry 315, the example WB circuitry 320, the example TM circuitry 325, the example downscale circuitry 330, the example pre-processing circuitry 410, the example multi-detectors circuitry 415, the example face detector circuitry 420, the example person detector circuitry 425, the example post-processing (NMS) circuitry 430, the example resize detections circuitry 435, and/or, more generally, the example dynamic ROI cropping circuitry 110 of FIG. 2, may be implemented by hardware alone or by hardware in combination with software and/or firmware. Thus, for example, any of the example lightweight pipeline 215, the example detector circuitry 220, the example ROI computing circuitry 225, the example binning circuitry 310, the example BL correction circuitry 315, the example WB circuitry 320, the example TM circuitry 325, the example downscale circuitry 330, the example pre-processing circuitry 410, the example multi-detectors circuitry 415, the example face detector circuitry 420, the example person detector circuitry 425, the example post-processing (NMS) circuitry 430, the example resize detections circuitry 435, and/or, more generally, the example dynamic ROI cropping circuitry 110, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example dynamic ROI cropping circuitry 110 of FIG. 2 may include one or more elements, processes, and/or devices in addition to, or instead of, those illustrated in FIG. 2, and/or may include more than one of any or all of the illustrated elements, processes and devices.

Flowchart(s) representative of example machine readable instructions, which may be executed by programmable circuitry to implement and/or instantiate the dynamic ROI cropping circuitry 110 of FIG. 2 and/or representative of example operations which may be performed by programmable circuitry to implement and/or instantiate the dynamic ROI cropping circuitry 110 of FIG. 2, are shown in FIGS. 9-11. The machine readable instructions may be one or more executable programs or portion(s) of one or more executable programs for execution by programmable circuitry such as the programmable circuitry 1212 shown in the example processor platform 1200 discussed below in connection with FIG. 12 and/or may be one or more function(s) or portion(s) of functions to be performed by the example programmable circuitry (e.g., an FPGA) discussed below in connection with FIGS. 13 and/or 14. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 9-11, many other methods of implementing the example dynamic ROI cropping circuitry 110 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 9-11 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 9 is a flowchart representative of example machine readable instructions and/or example operations 900 that may be executed, instantiated, and/or performed by programmable circuitry to implement region-of-interest (ROI) cropping. The example machine-readable instructions and/or the example operations 900 of FIG. 9 begin at block 905, at which the dynamic ROI cropping circuitry 110 (FIG. 2) and the ISP circuitry 230 obtain a first image, such as an input image. The lightweight pipeline 215 (FIG. 2) and the detector circuitry 220 (FIG. 2) of the dynamic ROI cropping circuitry 110 determines whether to perform downscaling and face or person detection on the first image (block 910). If the lightweight pipeline 215 and the detector circuitry 220 determines that downscaling and face or person detection are not to be performed (block 910: NO), the camera 115 (FIG. 1) provides the first image to the ISP circuitry 230.. The ISP circuitry 230 crops and scale the first image based on prior coordinates (block 955). The ISP circuitry 230 outputs a third image (block 960). If the lightweight pipeline 215 and the detector circuitry 220 determines that downscaling and face or person detection are to be performed (block 910: YES), the lightweight pipeline 215 downscales the first image to generate a second image having lower resolution than the first image (block 920). The region of interest (ROI) computing circuitry 225 identifies a region of interest in the second image (block 925). The ROI computing circuitry 225 applies padding to the ROI (block 930). The ROI computing circuitry 225 generates ROI coordinates of the detected ROI within the second image (block 935). The ROI computing circuitry 225 scales the ROI coordinates based on a ratio of a first resolution of the second image to a second resolution of the first image (block 940). The ROI computing circuitry 225 provides the ROI coordinates to the ISP circuitry 230 (block 945). The ISP circuitry 230 crops and scales the first image based on the ROI coordinates (block 950). The ISP circuitry 230 outputs a third image (block 960) based on the cropped and scaled first image. The dynamic ROI cropping circuitry 110 determines whether to continue cropping input image (block 965). If the dynamic ROI cropping circuitry 110 determines to continue cropping input image (block 965: YES), control returns to block 905 in which the dynamic ROI cropping circuitry 110 obtains another input image. If the dynamic ROI cropping circuitry 110 determines not to continue cropping input image (block 965: NO), the example instructions and/or operations 900 of FIG. 9 ends.

FIG. 10 is a flowchart representative of example machine readable instructions and/or example operations 1000 that may be executed, instantiated, and/or performed by programmable circuitry to downscale the first image to generate a second image having lower resolution than the first image. The example machine-readable instructions and/or the example operations 1000 of FIG. 10 begin at block 1005 at which the binning circuitry 310 (FIG. 3) perform a binning operation on the first image to generate a downscaled red green blue (RGB) image. The black level (BL) correction circuitry 315 (FIG. 3) performs black level correction on the RGB image (block 1010). The white balance (WB) circuitry 320 (FIG. 3) perform white balance correction by multiplying each pixel (block 1015) with a scaling factor. The tone mapping circuitry 325 (FIG. 3) performs global tone mapping on the RGB image (block 1020). The downscale circuitry 330 (FIG. 3) generates a second image having lower resolution than the first image (block 1025). The lightweight pipeline 215 provides the second image to the multi detector circuitry 415 (FIG. 4) (block 1030). The example instructions and/or operations 920 of FIG. 10 return to block 925 of FIG. 9.

FIG. 11 is a flowchart representative of example machine readable instructions and/or example operations 1100 that may be executed, instantiated, and/or performed by programmable circuitry to identify an ROI in the second image. The example machine-readable instructions and/or the example operations 1100 of FIG. 11 begin at block 1105 at which the multi-detector circuitry 415 determines whether a face or a person is detected. If no face or person is detected (block 1105: NO), control returns to determine whether a face or person is detected. If a face or a person is detected (block 1105: YES), the multi-detector circuitry 415 determines whether both a face and a person have been detected (block 1110). If the multi-detector circuitry 415 determines that both a face and a person have not been detected (block 1110: NO), the multi-detector circuitry 415 determines which of a face or a person has been detected (block 1130). If the multi-detector circuitry 415 determines that a face has been detected (block 1130: FACE), the post-processing NMS circuitry 430 uses face detected area for ROI framing calculation (block 1135). If the multi-detector circuitry 415 determines that a person has been detected (block 1130: PERSON), the post-processing NMS circuitry 430 uses person detected area for ROI framing calculation. (block 1140). The example instructions and/or operations 925 of FIG. 11 returns to block 930 of FIG. 9

If the multi-detector circuitry 415 determines that both a face and a person have been detected (block 1110: YES), the post-processing NMS circuitry 430 determines whether the face overlaps the detected person area by a threshold amount or percentage (block 1115). If the post-processing NMS circuitry 430 determines that the face area does not overlap the detected person area by a threshold amount or percentage (block 1115: NO), the person detector circuitry 425 identifies two ROI for two different people (block 1125). An example threshold amount or percentage can be 80% or any other threshold amount or percentage determined by user. The post-processing NMS circuitry 430 then merges the face and person detected area for ROI framing calculations (block 1145) and the example instructions and/or operations 925 of FIG. 11 returns to block 930 of FIG. 9.

If the post-processing NMS circuitry 430 determines that the face area overlaps the detected person area by a threshold amount or percentage (block 1115: YES), post-processing NMS circuitry 430 uses the face detected area for ROI framing calculation, and discards the person detected area (block 1120). The post-processing NMS circuitry 430 uses face detected area for ROI framing calculation (block 1135). The example instructions and/or operations 925 of FIG. 11 returns to block 930 of FIG. 9.

FIG. 12 is a block diagram of an example programmable circuitry platform 1200 structured to execute and/or instantiate the example machine-readable instructions and/or the example operations of FIGS. 9-11 to implement the dynamic ROI cropping circuitry 110 of FIG. 2. The programmable circuitry platform 1200 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 1200 of the illustrated example includes programmable circuitry 1212. The programmable circuitry 1212 of the illustrated example is hardware. For example, the programmable circuitry 1212 can be implemented by one or more integrated circuits, logic circuits, FPGAs, microprocessors, CPUs, GPUs, DSPs, and/or microcontrollers from any desired family or manufacturer. The programmable circuitry 1212 may be implemented by one or more semiconductor based (e.g., silicon based) devices. In this example, the programmable circuitry 1212 implements example lightweight pipeline 215 example detector circuitry 220, example region of interest (ROI) computing circuitry 225, example binning circuitry 310, example BL correction circuitry 315, example WB circuitry 320, example tone mapping circuitry 325, example downscale circuitry 330, example pre-processing circuitry 410, example multi-detectors circuitry 415, example face detector circuitry 420, example person detector circuitry 425, example post-processing (NMS) circuitry 430, example resize detections circuitry 435 and/or more generally example dynamic ROI cropping circuitry 110.

The programmable circuitry 1212 of the illustrated example includes a local memory 1213 (e.g., a cache, registers, etc.). The programmable circuitry 1212 of the illustrated example is in communication with main memory 1214, 1216, which includes a volatile memory 1214 and a non-volatile memory 1216, by a bus 1218. The volatile memory 1214 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 1216 may be implemented by flash memory and/or any other desired type of memory device. Access to the main memory 1214, 1216 of the illustrated example is controlled by a memory controller 1217. In some examples, the memory controller 1217 may be implemented by one or more integrated circuits, logic circuits, microcontrollers from any desired family or manufacturer, or any other type of circuitry to manage the flow of data going to and from the main memory 1214, 1216.

The programmable circuitry platform 1200 of the illustrated example also includes interface circuitry 1220. The interface circuitry 1220 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 1222 are connected to the interface circuitry 1220. The input device(s) 1222 permit(s) a user (e.g., a human user, a machine user, etc.) to enter data and/or commands into the programmable circuitry 1212. The input device(s) 1222 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1224 are also connected to the interface circuitry 1220 of the illustrated example. The output device(s) 1224 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1220 of the illustrated example, thus, typically includes a graphics driver card, a graphics driver chip, and/or graphics processor circuitry such as a GPU.

The interface circuitry 1220 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1226. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1200 of the illustrated example also includes one or more mass storage discs or devices 1228 to store firmware, software, and/or data. Examples of such mass storage discs or devices 1228 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1232, which may be implemented by the machine readable instructions of FIGS. 9-11, may be stored in the mass storage device 1228, in the volatile memory 1214, in the non-volatile memory 1216, and/or on at least one non-transitory computer readable storage medium such as a CD or DVD which may be removable.

FIG. 13 is a block diagram of an example implementation of the programmable circuitry 1212 of FIG. 12. In this example, the programmable circuitry 1212 of FIG. 12 is implemented by a microprocessor 1300. For example, the microprocessor 1300 may be a general-purpose microprocessor (e.g., general-purpose microprocessor circuitry). The microprocessor 1300 executes some or all of the machine-readable instructions of the flowcharts of FIGS. 9-11 to effectively instantiate the circuitry of FIG. 2 as logic circuits to perform operations corresponding to those machine readable instructions. In some such examples, the circuitry of FIG. 2 is instantiated by the hardware circuits of the microprocessor 1300 in combination with the machine-readable instructions. For example, the microprocessor 1300 may be implemented by multi-core hardware circuitry such as a CPU, a DSP, a GPU, an XPU, etc. Although it may include any number of example cores 1302 (e.g., 1 core), the microprocessor 1300 of this example is a multi-core semiconductor device including N cores. The cores 1302 of the microprocessor 1300 may operate independently or may cooperate to execute machine readable instructions. For example, machine code corresponding to a firmware program, an embedded software program, or a software program may be executed by one of the cores 1302 or may be executed by multiple ones of the cores 1302 at the same or different times. In some examples, the machine code corresponding to the firmware program, the embedded software program, or the software program is split into threads and executed in parallel by two or more of the cores 1302. The software program may correspond to a portion or all of the machine readable instructions and/or operations represented by the flowcharts of FIGS. 9-11.

The cores 1302 may communicate by a first example bus 1304. In some examples, the first bus 1304 may be implemented by a communication bus to effectuate communication associated with one(s) of the cores 1302. For example, the first bus 1304 may be implemented by at least one of an Inter-Integrated Circuit (I2C) bus, a Serial Peripheral Interface (SPI) bus, a PCI bus, or a PCIe bus. Additionally or alternatively, the first bus 1304 may be implemented by any other type of computing or electrical bus. The cores 1302 may obtain data, instructions, and/or signals from one or more external devices by example interface circuitry 1306. The cores 1302 may output data, instructions, and/or signals to the one or more external devices by the interface circuitry 1306. Although the cores 1302 of this example include example local memory 1320 (e.g., Level 1 (L1) cache that may be split into an L1 data cache and an L1 instruction cache), the microprocessor 1300 also includes example shared memory 1310 that may be shared by the cores (e.g., Level 2 (L2 cache)) for high-speed access to data and/or instructions. Data and/or instructions may be transferred (e.g., shared) by writing to and/or reading from the shared memory 1310. The local memory 1320 of each of the cores 1302 and the shared memory 1310 may be part of a hierarchy of storage devices including multiple levels of cache memory and the main memory (e.g., the main memory 1214, 1216 of FIG. 12). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1302 may be referred to as a CPU, DSP, GPU, etc., or any other type of hardware circuitry. Each core 1302 includes control unit circuitry 1314, arithmetic and logic (AL) circuitry (sometimes referred to as an ALU) 1316, a plurality of registers 1318, the local memory 1320, and a second example bus 1322. Other structures may be present. For example, each core 1302 may include vector unit circuitry, single instruction multiple data (SIMD) unit circuitry, load/store unit (LSU) circuitry, branch/jump unit circuitry, floating-point unit (FPU) circuitry, etc. The control unit circuitry 1314 includes semiconductor-based circuits structured to control (e.g., coordinate) data movement within the corresponding core 1302. The AL circuitry 1316 includes semiconductor-based circuits structured to perform one or more mathematic and/or logic operations on the data within the corresponding core 1302. The AL circuitry 1316 of some examples performs integer based operations. In other examples, the AL circuitry 1316 also performs floating-point operations. In yet other examples, the AL circuitry 1316 may include first AL circuitry that performs integer-based operations and second AL circuitry that performs floating-point operations. In some examples, the AL circuitry 1316 may be referred to as an Arithmetic Logic Unit (ALU).

The registers 1318 are semiconductor-based structures to store data and/or instructions such as results of one or more of the operations performed by the AL circuitry 1316 of the corresponding core 1302. For example, the registers 1318 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1318 may be arranged in a bank as shown in FIG. 13. Alternatively, the registers 1318 may be organized in any other arrangement, format, or structure, such as by being distributed throughout the core 1302 to shorten access time. The second bus 1322 may be implemented by at least one of an I2C bus, a SPI bus, a PCI bus, or a PCIe bus.

Each core 1302 and/or, more generally, the microprocessor 1300 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1300 is a semiconductor device fabricated to include many transistors interconnected to implement the structures described above in one or more integrated circuits (ICs) contained in one or more packages.

The microprocessor 1300 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1300, in the same chip package as the microprocessor 1300 and/or in one or more separate packages from the microprocessor 1300.

FIG. 14 is a block diagram of another example implementation of the programmable circuitry 1212 of FIG. 12. In this example, the programmable circuitry 1212 is implemented by FPGA circuitry 1400. For example, the FPGA circuitry 1400 may be implemented by an FPGA. The FPGA circuitry 1400 can be used, for example, to perform operations that could otherwise be performed by the example microprocessor 1300 of FIG. 13 executing corresponding machine readable instructions. However, once configured, the FPGA circuitry 1400 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1300 of FIG. 13 described above (which is a general purpose device that may be programmed to execute some or all of the machine readable instructions represented by the flowchart(s) of FIGS. 9-11 but whose interconnections and logic circuitry are fixed once fabricated), the FPGA circuitry 1400 of the example of FIG. 14 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 9-11. In particular, the FPGA circuitry 1400 may be thought of as an array of logic gates, interconnections, and switches. The switches can be programmed to change how the logic gates are interconnected by the interconnections, effectively forming one or more dedicated logic circuits (unless and until the FPGA circuitry 1400 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 9-11. As such, the FPGA circuitry 1400 may be configured and/or structured to effectively instantiate some or all of the operations/functions corresponding to the machine readable instructions of the flowchart(s) of FIGS. 9-11 as dedicated logic circuits to perform the operations/functions corresponding to those software instructions in a dedicated manner analogous to an ASIC. Therefore, the FPGA circuitry 1400 may perform the operations/functions corresponding to the some or all of the machine readable instructions of FIGS. 9-11 faster than the general-purpose microprocessor can execute the same.

In the example of FIG. 14, the FPGA circuitry 1400 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1400 of FIG. 14 may access and/or load the binary file to cause the FPGA circuitry 1400 of FIG. 14 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1400 of FIG. 14 to cause configuration and/or structuring of the FPGA circuitry 1400 of FIG. 14, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1400 of FIG. 14 may access and/or load the binary file to cause the FPGA circuitry 1400 of FIG. 14 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1400 of FIG. 14 to cause configuration and/or structuring of the FPGA circuitry 1400 of FIG. 14, or portion(s) thereof.

The FPGA circuitry 1400 of FIG. 14, includes example input/output (I/O) circuitry 1402 to obtain and/or output data to/from example configuration circuitry 1404 and/or external hardware 1406. For example, the configuration circuitry 1404 may be implemented by interface circuitry that may obtain a binary file, which may be implemented by a bit stream, data, and/or machine-readable instructions, to configure the FPGA circuitry 1400, or portion(s) thereof. In some such examples, the configuration circuitry 1404 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1406 may be implemented by external hardware circuitry. For example, the external hardware 1406 may be implemented by the microprocessor 1300 of FIG. 13.

The FPGA circuitry 1400 also includes an array of example logic gate circuitry 1408, a plurality of example configurable interconnections 1410, and example storage circuitry 1412. The logic gate circuitry 1408 and the configurable interconnections 1410 are configurable to instantiate one or more operations/functions that may correspond to at least some of the machine readable instructions of FIGS. 9-11 and/or other desired operations. The logic gate circuitry 1408 shown in FIG. 14 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1408 to enable configuration of the electrical structures and/or the logic gates to form circuits to perform desired operations/functions. The logic gate circuitry 1408 may include other electrical structures such as look-up tables (LUTs), registers (e.g., flip-flops or latches), multiplexers, etc.

The configurable interconnections 1410 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1408 to program desired logic circuits.

The storage circuitry 1412 of the illustrated example is structured to store result(s) of the one or more of the operations performed by corresponding logic gates. The storage circuitry 1412 may be implemented by registers or the like. In the illustrated example, the storage circuitry 1412 is distributed amongst the logic gate circuitry 1408 to facilitate access and increase execution speed.

The example FPGA circuitry 1400 of FIG. 14 also includes example dedicated operations circuitry 1414. In this example, the dedicated operations circuitry 1414 includes special purpose circuitry 1416 that may be invoked to implement commonly used functions to avoid the need to program those functions in the field. Examples of such special purpose circuitry 1416 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1400 may also include example general purpose programmable circuitry 1418 such as an example CPU 1420 and/or an example DSP 1422. Other general purpose programmable circuitry 1418 may additionally or alternatively be present such as a GPU, an XPU, etc., that can be programmed to perform other operations.

Although FIGS. 13 and 14 illustrate two example implementations of the programmable circuitry 1212 of FIG. 12, many other approaches are contemplated. For example, FPGA circuitry may include an on-board CPU, such as one or more of the example CPU 1420 of FIG. 13. Therefore, the programmable circuitry 1212 of FIG. 12 may additionally be implemented by combining at least the example microprocessor 1300 of FIG. 13 and the example FPGA circuitry 1400 of FIG. 14. In some such hybrid examples, one or more cores 1302 of FIG. 13 may execute a first portion of the machine readable instructions represented by the flowchart(s) of FIGS. 9-11 to perform first operation(s)/function(s), the FPGA circuitry 1400 of FIG. 14 may be configured and/or structured to perform second operation(s)/function(s) corresponding to a second portion of the machine readable instructions represented by the flowcharts of FIG. 9-11, and/or an ASIC may be configured and/or structured to perform third operation(s)/function(s) corresponding to a third portion of the machine readable instructions represented by the flowcharts of FIGS. 9-11.

It should be understood that some or all of the circuitry of FIG. 2 may, thus, be instantiated at the same or different times. For example, same and/or different portion(s) of the microprocessor 1300 of FIG. 13 may be programmed to execute portion(s) of machine-readable instructions at the same and/or different times. In some examples, same and/or different portion(s) of the FPGA circuitry 1400 of FIG. 14 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 1300 of FIG. 13 may execute machine readable instructions in one or more threads executing concurrently and/or in series. In some examples, the FPGA circuitry 1400 of FIG. 14 may be configured and/or structured to carry out operations/functions concurrently and/or in series. Moreover, in some examples, some or all of the circuitry of FIG. 2 may be implemented within one or more virtual machines and/or containers executing on the microprocessor 1300 of FIG. 13.

In some examples, the programmable circuitry 1212 of FIG. 12 may be in one or more packages. For example, the microprocessor 1300 of FIG. 13 and/or the FPGA circuitry 1400 of FIG. 14 may be in one or more packages. In some examples, an XPU may be implemented by the programmable circuitry 1212 of FIG. 12, which may be in one or more packages. For example, the XPU may include a CPU (e.g., the microprocessor 1300 of FIG. 13, the CPU 1420 of FIG. 14, etc.) in one package, a DSP (e.g., the DSP 1422 of FIG. 14) in another package, a GPU in yet another package, and an FPGA (e.g., the FPGA circuitry 1400 of FIG. 14) in still yet another package.

A block diagram illustrating an example software distribution platform 1505 to distribute software such as the example machine readable instructions 1232 of FIG. 12 to other hardware devices (e.g., hardware devices owned and/or operated by third parties from the owner and/or operator of the software distribution platform) is illustrated in FIG. 15. The example software distribution platform 1505 may be implemented by any computer server, data facility, cloud service, etc., capable of storing and transmitting software to other computing devices. The third parties may be customers of the entity owning and/or operating the software distribution platform 1505. For example, the entity that owns and/or operates the software distribution platform 1505 may be a developer, a seller, and/or a licensor of software such as the example machine readable instructions 1232 of FIG. 12. The third parties may be consumers, users, retailers, OEMs, etc., who purchase and/or license the software for use and/or re-sale and/or sub-licensing. In the illustrated example, the software distribution platform 1505 includes one or more servers and one or more storage devices. The storage devices store the machine readable instructions 1232, which may correspond to the example machine readable instructions of FIGS. 9-11, as described above. The one or more servers of the example software distribution platform 1505 are in communication with an example network 1510, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1232 from the software distribution platform 1505. For example, the software, which may correspond to the example machine readable instructions of FIG. 9-11, may be downloaded to the example programmable circuitry platform 1200, which is to execute the machine readable instructions 1232 to implement the dynamic ROI cropping circuitry 110. In some examples, one or more servers of the software distribution platform 1505 periodically offer, transmit, and/or force updates to the software (e.g., the example machine readable instructions 1232 of FIG. 12) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that implement high quality and low power region of interest (ROI) cropping. Disclosed systems, apparatus, articles of manufacture, and methods improve the efficiency of using a computing device by applying a high-resolution input image to a lightweight detection/segmentation pipeline that performs an initial ROI cropping on a reduced resolution image. The coordinates for this initial cropped ROI are provided to an ISP pipeline, which uses this information to perform ROI cropping and scaling directly on the high-resolution input image, thereby providing an output with the correct resolution without the need for upscaling. In this way, the ISP pipeline focuses on the ROI of the image that will be displayed, thereby conserving power and resources by avoiding unnecessary processing of pixels that will ultimately be discarded. Disclosed systems, apparatus, articles of manufacture, and methods are accordingly directed to one or more improvement(s) in the operation of a machine such as a computer or other electronic and/or mechanical device.

Further examples and combinations thereof include the following. Example 1 includes an apparatus comprising interface circuitry to obtain a first image, computer readable instructions, and at least one processor circuit to be programmed based on the computer readable instructions to provide the first image to image signal processor (ISP) circuitry, the ISP circuitry to implement an image processing pipeline to process the first image, downscale the first image to generate a second image having lower resolution than the first image, identify a region of interest (ROI) in the second image, and provide coordinates of the ROI to the ISP circuitry, the ISP circuitry to crop the first image based on the coordinates and to output a third image based on the cropped first image.

Example 2 includes the apparatus of example 1, wherein one or more of the at least one processor circuit is to downscale the first image after performing at least one of black level correction, white balancing or tone mapping on the first image.

Example 3 includes the apparatus of example 2, wherein one or more of the at least one processor circuit is to perform the at least one of the black level correction, the white balancing or the tone mapping on the first image based on data from the ISP circuitry, the ISP circuitry to generate the data based on an input image preceding the first image.

Example 4 includes the apparatus of any one of examples 1 to 3, wherein the ROI corresponds to at least one of a detected face or a detected person in the second image.

Example 5 includes the apparatus of any one of examples 1 to 4, wherein one or more of the at least one processor circuit is to apply padding to the ROI to generate the coordinates of the ROI, the padding proportional to detected dimensions of the ROI.

Example 6 includes the apparatus of example 5, wherein one or more of the at least one processor circuit is to scale the ROI coordinates based on a ratio of a first resolution of the first image and a second resolution of the second image.

Example 7 includes the apparatus of example 6, including the ISP circuitry, wherein the ISP circuitry is to scale the cropped first image to determine the third image, the third image scaled based on a resolution of a video display.

Example 8 includes At least one non-transitory machine readable medium comprising instructions to cause at least one processor circuit to at least provide a first image to image signal processor (ISP) circuitry, the ISP circuitry to implement an image processing pipeline, downscale the first image to generate a second image having lower resolution than the first image, identify a region of interest (ROI) in the second image, and provide coordinates of the ROI to the ISP circuitry to cause the ISP circuity to crop the first image based on the coordinates and to output a third image based on the cropped first image.

Example 9 includes the non-transitory machine readable medium of example 8, wherein the instructions are to cause one or more of the at least one processor circuit to downscale the first image after performing at least one of black level correction, white balance or tone mapping on the first image.

Example 10 includes the non-transitory machine readable medium of example 9, wherein the instructions are to cause one or more of the at least one processor circuit to perform the at least one of the black level correction, the white balance or the tone mapping on the first image based on data from the ISP circuitry, the ISP circuitry to generate the data based on an input image preceding the first image.

Example 11 includes the non-transitory machine readable medium of any one of examples 8 to 10, wherein the ROI corresponds to at least one of a detected face or a person in the second image.

Example 12 includes the non-transitory machine readable medium of any one of examples 8 to 11, wherein the instructions are to cause one or more of the at least one processor circuit is to apply padding to the ROI to generate the coordinates of the ROI, the padding proportional to detected dimensions of the ROI.

Example 13 includes the non-transitory machine readable medium of example 12, wherein the instructions are to cause one or more of the at least one processor circuit to scale the ROI coordinates based on a ratio of a first resolution of the first image and a second resolution of the second image.

Example 14 includes an apparatus comprising means for downscaling a first image to generate a second image having lower resolution than the first image and means for identifying a region of interest (ROI) in the second image, means for cropping the first image based on coordinates of the ROI in the second image.

Example 15 includes the apparatus of example 14, including means for performing at least one of black level correction, white balancing or tone mapping on the first image prior to the downscaling of the first image.

Example 16 includes the apparatus of example 15, wherein the means for performing is to perform the at least one of the black level correction, the white balancing or the tone mapping on the second image based on data from an image processing pipeline, the data generated based on an input frame preceding the second image.

Example 17 includes the apparatus of any one of examples 14 to 16, including means for implementing the image processing pipeline, the means for implementing the image processing pipeline including the means for cropping the first image.

Example 18 includes the apparatus of any one of examples 14 to 17, wherein the ROI corresponds to at least one of a detected face or a detected person in the second image.

Example 19 includes the apparatus of any one of examples 14 to 18, including means for determining the coordinates of the ROI in the second image, wherein the means for determining the coordinates is to apply padding to the ROI and determine the coordinates of the ROI based on the padding applied to the ROI, the padding proportional to detected dimensions of the ROI.

Example 20 includes the apparatus of example 19, wherein the means for determining the coordinates is to scale the ROI coordinates based on a ratio of a first resolution of the first image and a second resolution of the second image. The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

**Claims**

1. An apparatus comprising:

   interface circuitry to obtain a first image;
   computer readable instructions; and
   at least one processor circuit to be programmed based on the computer readable instructions to:

   provide the first image to image signal processor (ISP) circuitry, the ISP circuitry to implement an image processing pipeline to process the first image;
   downscale the first image to generate a second image having lower resolution than the first image;
   identify a region of interest (ROI) in the second image; and
   provide coordinates of the ROI to the ISP circuitry, the ISP circuitry to crop the first image based on the coordinates and to output a third image based on the cropped first image.

2. The apparatus of claim 1, wherein one or more of the at least one processor circuit is to downscale the first image after performing at least one of black level correction, white balancing or tone mapping on the first image.

3. The apparatus of claim 2, wherein one or more of the at least one processor circuit is to perform the at least one of the black level correction, the white balancing or the tone mapping on the first image based on data from the ISP circuitry, the ISP circuitry to generate the data based on an input image preceding the first image.

4. The apparatus of any one of claims 1 to 3, wherein the ROI corresponds to at least one of a detected face or a detected person in the second image.

5. The apparatus of any one of claims 1 to 4, wherein one or more of the at least one processor circuit is to apply padding to the ROI to generate the coordinates of the ROI, the padding proportional to detected dimensions of the ROI.

6. The apparatus of claim 5, wherein one or more of the at least one processor circuit is to scale the ROI coordinates based on a ratio of a first resolution of the first image and a second resolution of the second image.

7. The apparatus of claim 6, including the ISP circuitry, wherein the ISP circuitry is to scale the cropped first image to determine the third image, the third image scaled based on a resolution of a video display.

8. A method comprising:

   providing a first image to image signal processor (ISP) circuitry, the ISP circuitry to implement an image processing pipeline;
   downscaling the first image to generate a second image having lower resolution than the first image;
   identifying a region of interest (ROI) in the second image; and
   providing coordinates of the ROI to the ISP circuitry to cause the ISP circuity to crop the first image based on the coordinates and to output a third image based on the cropped first image.

9. The method of claim 8, wherein the downscaling of the first image is performed after at least one of black level correction, white balance or tone mapping on the first image.

10. The method of claim 9, including performing the at least one of the black level correction, the white balance or the tone mapping on the first image based on data from the ISP circuitry, the ISP circuitry to generate the data based on an input image preceding the first image.

11. The method of any one of claims 8 to 10, wherein the ROI corresponds to at least one of a detected face or a person in the second image.

12. The method of any one of claims 8 to 11, including applying padding to the ROI to generate the coordinates of the ROI, the padding proportional to detected dimensions of the ROI.

13. The method of claim 12, including scaling the ROI coordinates based on a ratio of a first resolution of the first image and a second resolution of the second image.

14. The method of claim 13, including scaling the cropped first image with the ISP circuitry to determine the third image, the third image scaled based on a resolution of a video display.

15. A machine readable medium comprising instructions to cause at least one processor circuit to perform the method of any one of claims 8 to 14.

CAMERA 115

DYNAMIC ROI CROPPING CIRCUITRY 110

DISPLAY 125

CLOUD NETWORK 130

CAMERA 115

DYNAMIC ROI CROPPING CIRCUITRY 110

DISPLAY 135

100

120

**FIG. 1**

EP 4 622 281 A1

**FIG. 2**

215

BAYER 210 → BINNING CIRCUITRY 310 → DS RGB 335 → BLACK LEVEL (BL) CORRECTION CIRCUITRY 315 → WHITE BALANCE (WB) CIRCUITRY 320 → TONE MAPPING (TM) CIRCUITRY 325 → DOWNSCALE CIRCUITRY 330 →

FIG. 3

220 ⟶

RGB IMAGE 440 → PRE-PROCESSING CIRCUITRY 410 →

**MULTI-DETECTORS CIRCUITRY 415**

FACE DETECTOR CIRCUITRY 420

PERSON DETECTOR CIRCUITRY 425

→ POST-PROCESSING (NMS) CIRCUITRY 430 → DETECTIONS → RESIZE DETECTIONS CIRCUITRY 435 → DETECTIONS →

**FIG. 4**

EP 4 622 281 A1

IMAGE SIGNAL PROCESSOR CIRCUITRY 230

| WB CIRC. 505 | SCALING CIRC. 240 | SHADING CIRC. 510 | TONE MAPPING CIRC. 515 | SHARPENING CIRC. 520 |
|---|---|---|---|---|
| BL CIRC. 525 | CROP CIRC. 235 | DEMOSAIC CIRC. 530 | CCM 535 | DENOISERS 540 |

BAYER

YUV

○ ○ ○

**FIG. 5**

FIG. 6

**FIG. 7**

EP 4 622 281 A1

**FIG. 8**

900

START

905

OBTAIN A FIRST IMAGE

910

NO     PERFORM DOWNSCALE AND FACE OR PERSON DETECTION ON A FIRST IMAGE?     YES

920

DOWNSCALE THE FIRST IMAGE TO GENERATE A SECOND IMAGE HAVING LOWER RESOLUTION THAN THE FIRST IMAGE

925

IDENTIFY A REGION OF INTEREST (ROI) IN THE SECOND IMAGE

930

APPLY PADDING TO THE ROI

935

GENERATE ROI COORDINATES OF THE DETECTED ROI WITHIN THE SECOND IMAGE

940

SCALE THE ROI COORDINATES BASED ON A RATIO OF A FIRST RESOLUTION OF THE SECOND IMAGE AND A SECOND RESOLUTION OF THE FIRST IMAGE

945

PROVIDE ROI COORDINATES TO THE ISP CIRCUITRY

950

CROP AND SCALE THE FIRST IMAGE BASED ON THE ROI COORDINATES

955

CROP AND SCALE THE FIRST IMAGE BASED ON PRIOR COORDINATES

960

OUTPUT A THIRD IMAGE

965

YES     CONTINUE CROPPING INPUT IMAGE?

NO

END     **FIG. 9**

920

DOWNSCALE THE FIRST IMAGE TO GENERATE A SECOND IMAGE HAVING LOWER RESOLUTION THAN THE FIRST IMAGE

1005

BINNING OPERATION ON FIRST IMAGE TO GENERATE A DOWNSCALED RED GREEN BLUE (RGB) IMAGE

1010

PERFORM BLACK LEVEL CORRECTION ON THE RGB IMAGE

1015

PERFORM WHITE BALANCE CORRECTION BY MULTIPLYING A SCALING FACTOR TO EACH PIXEL

1020

PERFORM GLOBAL TONE MAPPING ON THE RGB IMAGE

1025

GENERATE A SECOND IMAGE HAVING LOWER RESOLUTION THAN THE FIRST IMAGE

1030

PROVIDE THE SECOND IMAGE TO A MULTI DETECTOR CIRCUITRY

RETURN

**FIG. 10**

925

IDENTIFY A ROI IN THE SECOND IMAGE

1105

NO ← IS FACE OR PERSON DETECTED?

YES

1110

NO ← IS FACE AND PERSON DETECTED?

YES

1115

WHETHER THE FACE OVERLAPS THE DETECTED PERSON AREA
BY A THRESHOLD AMOUNT OR PERCENTAGE? → NO

YES

1120

FACE DETECTED AREA IS USED FOR ROI FRAMING CALCULATION, AND
DISCARD PERSON DETECTED AREA

1125

IDENTIFY TWO ROI FOR TWO DIFFERENT PEOPLE

1130

FACE ← IS FACE OR PERSON DETECTED?

PERSON

1135

USE FACE DETECTED AREA
FOR ROI FRAMING
CALCULATION

1140

USE PERSON DETECTED
AREA FOR ROI FRAMING
CALCULATION

1145

MERGE FACE AND PERSON
DETECTED AREA FOR ROI
FRAMING CALCULATIONS

RETURN

**FIG. 11**

**FIG. 12**

**FIG. 13**

**FIG. 14**

1505

SOFTWARE
DISTRIBUTION
PLATFORM

1232

INSTR

1510

NETWORK

1200

PROCESSOR
PLATFORM(S)

1232

INSTR

## FIG. 15

Europäisches
Patentamt

European
Patent Office

Office européen
des brevets

# EUROPEAN SEARCH REPORT

**Application Number**

EP 25 15 6881

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/031529 A1 (CHU JOSEPH YAO-HUA [US] ET AL) 25 January 2024 (2024-01-25) * paragraph [0025] - paragraph [0095] * | 1-15 | INV. H04N23/611 H04N23/69 H04N5/262 G06V10/25 |
| X | US 2020/364481 A1 (KORNIENKO ALEXEY [GB] ET AL) 19 November 2020 (2020-11-19) * paragraph [0014] - paragraph [0030] * | 1-15 | G06V40/16 H04N7/15 H04N23/63 |
| X | US 2023/114980 A1 (GUPTA RIJUL [US]) 13 April 2023 (2023-04-13) * paragraph [0048] - paragraph [0116] * | 1,4-8, 11-15 | H04N23/68 H04N23/80 |
| X A | US 2019/228275 A1 (SMILANSKY ZEEV [IL] ET AL) 25 July 2019 (2019-07-25) * paragraph [0022] - paragraph [0067] * | 1,4,8, 11,15 6,13 | |
| X | US 2019/034734 A1 (YEN CHEN-LAN CHESTER [US] ET AL) 31 January 2019 (2019-01-31) * paragraph [0109] - paragraph [0128]; figures 8,9 * | 1,4,8, 11,15 | |

**TECHNICAL FIELDS SEARCHED (IPC)**

H04N
G06V

The present search report has been drawn up for all claims

| Place of search | Date of completion of the search | Examiner |
|---|---|---|
| Munich | 24 June 2025 | Gil Zamorano, Gunnar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 6881

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | Publication date | Patent family member(s) | Publication date |
|---|---|---|---|
| US 2024031529 A1 | 25-01-2024 | US 2024031529 A1<br>US 2025008055 A1 | 25-01-2024<br>02-01-2025 |
| US 2020364481 A1 | 19-11-2020 | NONE | |
| US 2023114980 A1 | 13-04-2023 | NONE | |
| US 2019228275 A1 | 25-07-2019 | NONE | |
| US 2019034734 A1 | 31-01-2019 | NONE | |

EPO FORM P0459

For more details about this annex : see Official Journal of the European Patent Office, No. 12/82

**EP 4 622 281 A1**

**Patent documents cited in the description**

- US 63568942